# EUROPEAN PATENT SPECIFICATION

(11) **EP 0 497 019 B1**
(45) Date of publication and mention of the grant of the patent: **27.12.1996**
(21) Application number: 91300689.6
(22) Date of filing: 30.01.1991
(51) Int. Cl.: G01N 35/02

(54) **Automatic immunological analysing system**
Automatisches System zur immunologischen Analyse
Système automatique d'analyse immunologique

(43) Date of publication of application: 05.08.1992
(73) Proprietor: OLYMPUS OPTICAL CO., LTD., Tokyo 151 (JP)
(72) Inventor: Abe, Kenichi, Hachioji City, Tokyo (JP); Kame, Masaharu, Sagamihara City, Kanagawa Pref. (JP); Hashimoto, Naokazu, Hachioji City, Tokyo (JP)
(74) Representative: Overbury, Richard Douglas

(56) References cited:
- EP-A- 0 193 016
- EP-A- 0 410 645
- DE-A- 1 648 900
- DE-A- 3 402 304
- PATENT ABSTRACTS OF JAPAN vol. 12, no. 319 (P-751)(3166) August 30, 1988 & JP-A-63 85 361
- PATENT ABSTRACTS OF JAPAN vol. 10, no. 308 (P-508)(2364) October 21, 1986 & JP-A- 61 122 570
- PATENT ABSTRACTS OF JAPAN vol. 9, no. 24 (P-331)(1747) January 31, 1985 & JP-A- 59 170 771

## Description

The present invention relates to an automatically chemical analyzing apparatus, particularly relates to an automatic immunological analysing apparatus for measuring an antigen or an antibody contained in a sample liquid with the aid of immunological reaction.

Since protein, such as Globulin and enzyme, hormone, bacteria and virus, etc. included in blood or humor, have similar molecular structures, and an amount of the protein, hormone, bacteria, virus, etc. is very little, it is difficult to conduct an identification of these substances and a quantitative analysis thereof. Therefore, in order to analyse these substances, an immunological analysing method with the aid of an antigen-antibody reaction is generally used. For instance, in Japanese Preliminarily Laid-open Publication No. 59-135366, Japanese Preliminarily Laid-open Publication No. 61-258171, Japanese Preliminarily Laid-open Publication No. 62-50662 and "Medical Technology" vol. 17, No. 8 issued on July, 1989, are disclosed immunological analysing apparatuses in which such method is applied. There are some analysing methods for use in such immunological analysing apparatuses, for instance, a radioimunoassay, an enzymeimmunoassay and a fluoroimmunoassay. In these methods a labeled substance is used. In the heterogeneous method, so-called B-F separation for separating an immune complex (bound) from a free labeled antibody (antigen) should be conducted. It should be noted the immune complex is produced by an antigen-antibody reaction of a labeled antibody (labeled antigen) labeled by the labeled substance and an antigen (antibody) contained in a sample; and the free labeled antigen is free from the antigen-antibody reaction. On the other hand, in the homogeneous method, the B-F separation is not necessary. Generally, in the non-isotropic heterogeneous reaction system, a glass bead having a large diameter, a polystyrene bead having a large diameter or a test tube is used as a solid phase carrier. In this reaction system, a colorimetric measurement for measuring an absorbance of the test liquid is used as same as the conventional biochemical analysing.

A turbidimetry method is also known as one of the immunological analysing methods. In the turbidimetry method, a suspension is produced by an anitgen-antibody reaction of the particle bonding carrier immobilizing an antibody or an antigen and the sample; and a turbidity of said suspension is measured to conduct a quantitative analysing of the antigen or antibody included in the sample.

However, in the conventional automatic analysing apparatus to which each of the above mentioned immunological analysing methods can be applied, a series of analysing process, such as a delivery of the sample and a delivery of the reagent, is conducted while the reaction vessels are transferred along the reaction line of the reaction section of the apparatus. Therefore, the apparatus has problems such that a time period during the reaction vessel should be set in the reaction section becomes long depending upon the reaction time of the sample to be measured and thus an analysing ability is limited.

It is known from JP-A-63-85361 to provide an auxiliary thermostatic tank around an annular thermostatic tank containing a reaction line. This enables sample vessels undergoing lengthy analysis to be removed from the reaction line and temporarily stored in temperature-controlled conditions. Nevertheless, the structure of the apparatus around the reaction line is still complex.

Furthermore, in the conventional apparatus, since a reaction vessel storing portion *per se* constitutes a reaction section, it is not possible to move the reaction vessel while analysis is conducted in the reaction section; and the sample has to be delivered into the reaction vessels at a sample delivering position for its exclusive use and the reagent has to be delivered into the reaction vessels at a reagent delivering position for its exclusive use. Therefore, in the conventional apparatus, it is difficult to make the degree of freedom of the reaction system large.

According to the present invention, there is provided an automatic immunological analysing apparatus comprising:
a sample vessel storing section adapted to hold a plurality of sample vessels each containing a sample including an antigen or an antibody to be measured;
a reaction vessel storing section provided with a thermostat and adapted to hold a plurality of reaction vessels;
a reaction table arranged to be kept at a constant temperature and adapted to hold one or more reaction vessels and to move said reaction vessels along or around a reaction line;
a sample delivering means for delivering a sample contained in a sample vessel held in the sample vessel storing section to a reaction vessel held in the reaction vessel storing section or in the reaction vessel mounting section;
a reaction vessel transporting means for transporting a reaction vessel between the reaction vessel storing section and the reaction table;
reagent delivering means for delivering a reagent into a reaction vessel held in the reaction vessel storing section or in the reaction vessel mounting section; and
light measuring means for measuring a light intensity generated by or transmitted through a mixture of the sample and the reagent contained in a reaction vessel; wherein
the reaction vessel storing section is adapted to hold both empty reaction vessels prior to analysis and sample-containing reaction vessels during analysis.

Further, said reaction vessel storing section is kept at a constant temperature, which in a preferred embodiment is suitable for conduction of an immunological reaction, and said reaction vessel transporting means is arranged to be capable of reciprocally moving between the reaction vessel storing section and the reaction section for transporting the reaction vessels therebetween.

In this automatic immunological analysing apparatus, since the apparatus is arranged such that the reaction vessels can be reciprocally transported between the reaction vessel storing section and the reaction section, analysing items, in which various kinds of reaction time are necessary for analysing, can be analyzed in one apparatus efficiently. That is to say, even an analysing item which needs a long reaction time for obtaining an analysing data with a high sensitivity can be analyzed in an efficient manner.

Further, since not only the reaction section but also reaction vessel storing section is kept at a constant temperature suitable for the antigen-antibody reaction, the reaction vessels stored in the reaction vessel storing section are preliminarily warmed so that when the reaction vessel is transferred to the reaction section, the temperature of the reaction vessel is risen at the desired temperature soon. Therefore, the analysing time can be shortened and the analysing ability of the apparatus is made high.

Furthermore, the reaction vessel storing section can be arranged to have multiple functions. For instance, a magnet is arranged in the section; and the section functions as a magnetic particle separating device in case magnetic particle reagent is used as a reagent to carry out an analysing with a high sensitivity.
Fig. 1 is a schematic view showing a first embodiment of the automatic immunological analysing apparatus according to the invention;
Fig. 2 is a schematic view illustrating a second embodiment of the automatic immunological analysing apparatus according to the invention; and
Fig. 3 is a schematic view representing a variation of the second embodiment illustrated in Fig. 3.

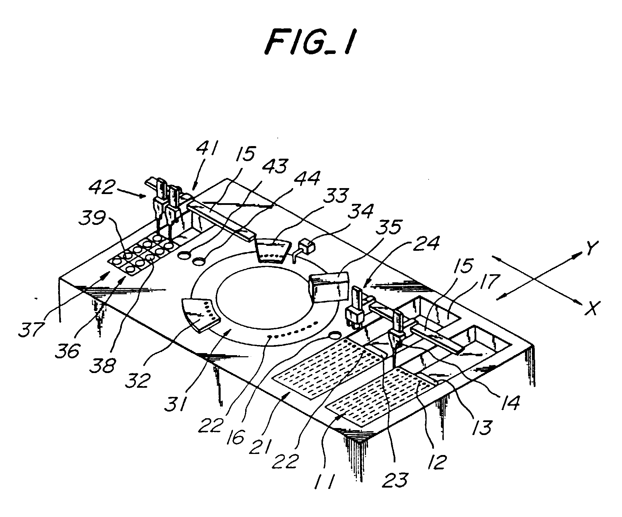

Fig. 1 shows a first embodiment of the automatic immunological analysing apparatus according to the present invention. In a sample vessel storing section 11, a rack 13 for storing a plurality of sample vessels 12 is provided in a detachable manner. The rack 13 is arranged to be movable in a forward and backward directions of the apparatus, i.e. Y direction, by a rack driving mechanism (not shown). Above the sample vessel storing section 11, there is provided a sample delivering device 14 for delivering a sample contained in said sample vessels. A nozzle of the sample delivering device 14 is arranged to be movable in X direction perpendicular to Y direction and in an upper and lower directions and arranged such that the nozzle can be made clean at a nozzle cleaning device 16. Since the driving mechanisms for moving the rack 13 and the sample delivering device 14 are well known in the technical field of the chemical analysing apparatus, the concrete structures therefor are not explained in this specification. In the sample vessel storing section 11, there are also provided a specimen ID detection device, an ID detection device for detecting special specimen such as a specimen for calibration, QC specimen and an emergency specimen. These detection devices are also well known in the technical field of the automatic chemical analysing apparatus, and therefore these devices are not shown in the Drawings.

Next to the sample vessel storing section, there is provided a reaction vessel storing section 21. In the reaction vessel storing section 21, is contained a rack 23 for holding a plurality of reaction vessels 22. The rack 23 is movably arranged by a rack driving mechanism (not shown) in Y direction; and there is provided a reaction vessel transporting device 24 by which the reaction vessel 22 in the reaction vessel rack 23 is lifted up and then transported in X direction along a rail 15. It should be noted that in the reaction vessel storing section 21 a thermostat 17 is provided by which the reaction vessel storing section is kept at a constant temperature substantially equal to the temperature in a reaction table 31.

In this embodiment, the sample contained in the sample vessel 12 of the sample vessel storing section 11 is sucked by the sample delivering device 14, and then the nozzle of the sample delivering device 14 is moved in X direction to deliver the sample into the reaction vessel 22 stored in the reaction vessel storing section 21. Thereafter, the reaction vessel 22 is transported to a reaction table 31, which constitutes a reaction line, by the reaction vessel transporting device 24; and the reaction vessel 22 is set in a given position therefor provided in the reaction table 31. It should be noted that it is possible to arrange such that the reaction vessel 22 is firstly set in the reaction table 31 and then the sample is delivered in the reaction vessel 22. The nozzle of the sample delivering device 14 should be made clean prior to or after the sample delivering by a nozzle cleaning device 16.

The reaction table 31 is arranged to be kept at a constant temperature suitable for conducting an immunological reaction all around thereover and arranged to be rotatable in accordance with a predetermined sequence. Above the reaction table 31, there are provided first and second B-F separating portions 32 and 33, a substance liquid delivering device 34 and a light measurement device 35 at a given angle. And in the circumference of the reaction table 31, there are provided first and second reagent storing sections 36 and 37. In the present embodiment, first and second reagents are stored in the first and second reagent storing sections 36 and 37, however, more than two kinds of reagents can be stored by arranging the same numbers of storing sections as the kinds of reagents.

In the first reagent storing section 36, a plurality of particle reagent vessels 38 containing a first reagent, in which a predetermined antibody or antigen is immobilized in accordance with the analysing item to be analysed, are set up; and in the second reagent storing section 37, there are arranged a plurality of conjugate reagent vessels 39 containing enzyme labeled antibody or enzyme labeled antigen (conjugate reagent) in accordance with items to be analysed. The first reagent vessels 38 and the conjugate reagent vessels 39 set in these first and second reagent storing sections 36 and 37, respectively, are arranged to be movable in Y direction by a reagent vessel driving mechanism (not shown).

Above the first and second reagent storing sections, there are provided a first reagent delivering device for delivering the first reagent and a second reagent delivering device for delivering the second reagent, respectively; and nozzles of these delivering devices are arranged to be movable in X direction along the rail 15 and in upper and lower directions. The nozzles should be made clean by nozzle cleaning devices 43 and 44 prior to or after the reagent delivering.

The first B-F separating section 32 is for separating the antigen or the antibody of the sample immobilized to the given antibody or the given antigen bonded to the surface of the particle carrier by an immunological reaction from the antigen or the antibody contained in the sample free from the given antibody or the given antigen; and the second B-F separating section 33 is for separating the conjugate reagent immobilized onto the given antibody or the given antigen bonded to the surface of the particle carrier by the immunological reaction from the conjugate reagent free from the given antibody or the given antigen.

In the embodiment shown in Fig. 1, an automatic light amount controlling mechanism may be arranged in the light measurement device 35 for controlling the light amount of the device 35 in accordance with a luminescence amount of the test liquid in order to measure the luminescence amount of the test liquid with a wide range.

An embodiment of analysing operation suitable for the apparatus according to the first embodiment will be explained in the following.

Firstly, the sample contained in the sample vessel 12 stored in the sample vessel storing section 11 is delivered into the reaction vessel 22 stored in the reaction vessel storing section 21 by the sample delivering device 14. Thereafter, the reaction vessel containing the sample is transported to the reaction table 31 and set in a given place therein by the reaction vessel transporting device 24.

Next, into the reaction vessel 22 transported in the reaction table 31, the particle reagent is delivered from the particle reagent vessel 38, which is set in the first reagent storing section 36, corresponding to the item to be analysed by the first reagent delivering device 41 to conduct the antigen-antibody reaction. After a predetermined reaction time period has been passed, the reaction vessel 22 is transferred to the first B-F separating section 32. In the first B-F separating section 32, the antigen or the antibody which is immobilized to the given antibody or the given antigen bonded on the surface of the particle carrier by an immunological reaction is separated from the antigen or the antibody which is free from the given antibody or the given antigen bonded on the surface of the particle carrier.

After the first B-F separation conducted in the first B-F separating section 32, into the reaction vessel 22 is delivered the conjugate reagent contained in the conjugate reagent vessel 39 set in the second reagent storing section 37 by the second reagent delivering device 42 to conduct the antigen-antibody reaction in the reaction vessel 22. The conjugate reagent vessel 39 should be selected in accordance with the item to be analysed. After a predetermined reaction time period has been passed, the reaction vessel 22 is transferred to the second B-F separating section 33. In the second B-F separating section 33, the conjugate reagent immobilized to the antigen or the antibody caught by the particular particles by an immunological reaction is separated from the conjugate reagent which is free from the antigen or the antibody caught by the particular particles.

After the second B-F separation conducted in the second B-F separating section 33, a substance liquid is delivered in the reaction vessel 22 by a substance liquid delivering device 34 to obtain a color development or a light luminescence in the test liquid. Thereafter, the reaction vessel 22 is transferred to the light measurement device 35 to measure the color development amount or the light luminescence amount for conducting the quantitative analysis concerning the items to be measured.

Data is obtained by measuring the test liquid by the light measurement device 35 in this manner, and this data is supplied to a signal processing device (not shown) to obtain a measurement result. The measurement result is displayed in a display device, printed out, or supplied to a host computer via an output device, as occasion demand.

A series analysing operations concerning one analysing item is finished as stated in the above. The used reaction vessel is removed from the reaction table 31 by the reaction transporting device 24 and transported to the original position of the reaction vessel storing section 21; and the next reaction vessel 22 in which the sample has been delivered is set in the reaction table 31 by the reaction vessel transporting device 24. Such operation is repeated to conduct analysis of the sample in a successive manner.

In the analysing operation stated in the above, it is arranged that the reaction vessel 22 is set in the reaction table 31 until the analysis has been finished. However, in case of an item to be analysed for which a long reaction time is necessary, or in case a few number of reaction vessels 22 are set in the reaction table 31, it is possible to arrange such that the reaction vessel 22 is returned to the reaction vessel storing section 21 once and after a predetermined reaction time has been passed, the reaction vessel 22 is set in the reaction table 31 again to conduct the following analysing operation. In such arrangement, even if the reaction time for analysing is so long or the number of the reaction vessels 22 set in the reaction table 31 is so few that the reaction section is not wasted and the analysing ability can be utilized efficiently.

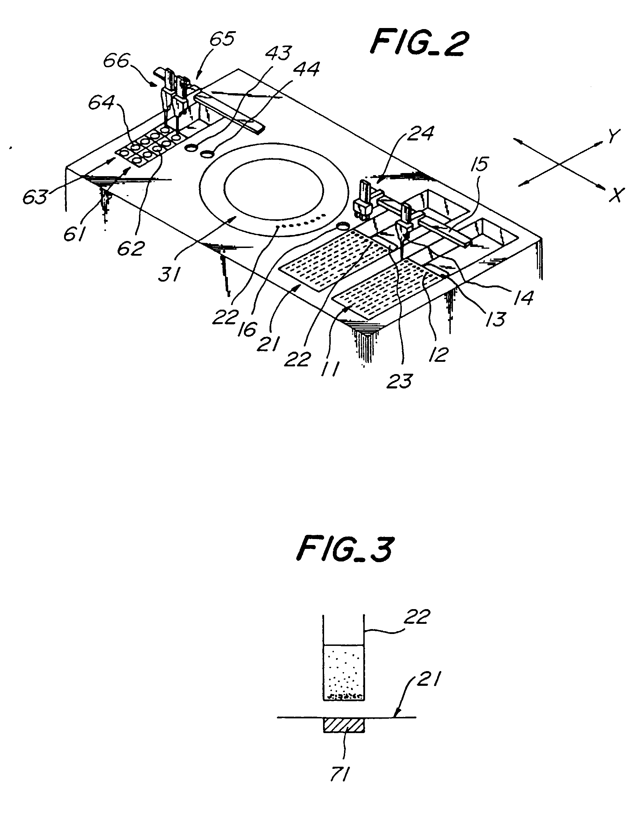

Fig. 2 shows the second embodiment of the automatic immunological analysing apparatus according to the invention. In this embodiment, latex particles is used as the particle carrier for immobilizing the predetermined antibody or antigen, and the test liquid is measured by a turbidimetry method. Therefore, there is not provided the first and second B-F separating sections 32 and 33, the substance liquid delivering device 34 and the light measurement device 35 in the analysing apparatus, but there is provided a light measurement section inside of the apparatus for measuring the turbidity of the test liquid through the reaction vessel held on the reaction table 31. In a first reagent storing section 61, a plurality of first reagent vessels 62 each containing a stabilization liquid (first reagent) corresponding to the item to be analysed are set up; and in a second reagent storing section 63, a plurality of second reagent vessels 64 containing a liquid with latex particles (second reagent), onto which a given antibody or a give antigen corresponding to the item to be analysed is immobilized, are set up.

The first and second reagents contained in the first and second reagent vessels 62 and 63 are delivered into the reaction vessel 22 set in the reaction table 31 by the first and second reagent delivering device 65 and 66, respectively.

In this embodiment, firstly, the sample is delivered into the reaction vessel 22 at the reaction vessel storing section 21, and then the reaction vessel 22 is transported to the reaction table 31 by the reaction vessel transporting device 24. Thereafter, the first reagent (stabilization liquid) is delivered into the reaction vessel 22 by means of the first reagent delivering device 65 and then the reacted liquid in the reaction vessel 22 is measured with a measurement light having a predetermined wavelength at the light measurement section. Then, the second reagent (latex particles) is delivered into the reaction vessel 22 by means of the second reaction delivering device 66 in order to conduct a reaction. And the reacted liquid is measured at the light measurement section as same as the above. In case a rate assay is conducted, these light measurements after delivering the first and second reagents should be conducted several times. And then, the reaction vessel 22 is returned to the reaction vessel storing section 21 by the reaction vessel transporting device 24.

In such manner, the desired analysing items can be analysed by the turbidimetry method.

It should be noted that, in the second embodiment, the invention can be applied to various analyses by that the reaction vessel 22 is once returned from the reaction table 31 to the reaction vessel storing section 21 after the first reagent delivering or after the second reagent delivering.

The second reagent is not limited to the latex particles, but a mixture of the latex particles immobilizing the given antibody or the given antigen and magnetic particles can be used therefor. In this case, a magnet 71 should be arranged at a portion opposite to a bottom of the reaction vessel 22 stored in the reaction vessel storing section 21, as shown in Fig. 3. And after the second reagent delivery, the reaction vessel 22 is returned to the reaction vessel storing section 21 from the reaction table 31 by the reaction vessel transporting device 24. In the reaction vessel storing section 21, the magnetic particles and the latex particles bonded with said magnetic particles via an antigen or an antibody included in the sample are sedimented perfectly by means of the magnet 71. The reaction vessel is returned to the reaction table 31 by the reaction vessel transporting device 24 quickly thereafter, and the light intensity of the test liquid is measured to obtain an analysing data. In such manner, a stabilized measurement data having a high sensitivity can be obtained.

As stated in the above, according to the present invention, it is possible to warm the reaction vessel in the reaction vessel storing section, so that the reaction time in the reaction section can be made short and the analysing ability can be risen. And since the reaction vessel storing section is kept at a constant temperature suitable for analysing, even if the analysing item, which needs a long reaction time, has to be measured, the analysing ability of the apparatus is not down by arranging such that the reaction vessel transported to the reaction section is returned to the reaction vessel storing section once and then transported to the reaction section again by using the reaction vessel transporting means. Furthermore, in case the magnet is provided in the reaction vessel storing section, the magnet works as a magnetic particle separating device; and the magnetic particles and the latex particles bonded with the magnetic particles via the antigen or antibody of sample are separated from the free antigen or the free antibody contained in the sample taking a long time; and thus a stabilized analysing with a high sensitivity can be conducted.

## Claims

1. An automatic immunological analysing apparatus comprising:
a sample vessel storing section (11) adapted to hold a plurality of sample vessels (12) each containing a sample including an antigen or an antibody to be measured;
a reaction vessel storing section (21) provided with a thermostat (17) and adapted to hold a plurality of reaction vessels (22);
a reaction table (31) arranged to be kept at a constant temperature and adapted to hold one or more reaction vessels (22) and to move said reaction vessels (22) along a reaction line;
a sample delivering means (14) for delivering a sample contained in a sample vessel (12) held in the sample vessel storing section (11) to a reaction vessel (22) held in the reaction vessel storing section (21) or in the reaction vessel mounting section (31);
a reaction vessel transporting means (24) for transporting a reaction vessel (22) between the reaction vessel storing section (21) and the reaction table (31);
reagent delivering means (41,42) for delivering a reagent into a reaction vessel (22) held in the reaction vessel storing section (21) or in the reaction vessel mounting section (31); and
light measuring means (35) for measuring a light intensity generated by or transmitted through a mixture of the sample and the reagent contained in a reaction vessel (22); characterised in that
the reaction vessel storing section (21) is adapted to hold both empty reaction vessels (22) prior to analysis and sample-containing reaction vessels (22) during analysis.

2. An apparatus as claimed in claim 1, wherein said reaction table (31) comprises a rotatable reaction table (31) adapted to perform a predetermined sequence of rotational movements.

3. An apparatus as claimed in claim 2, wherein first and second B-F separating sections (32,33), a substance liquid delivering device (34) and said light measuring means (35) are disposed circumferentially about said reaction table (31) and wherein first and second reagent storing sections (36,37) are provided at a side of said reaction table (31).

4. An apparatus as claimed in claim 3, wherein a plurality of reagent vessels (38) each containing a first reagent immobilizing a given antibody or a given antigen are stored in the first reagent storing section (36) ; a plurality of conjugate vessels (39) each containing a labelled antibody or a labelled antigen corresponding to items to be analysed are stored in the second reagent storing section (37) ; and wherein the first and second reagent vessels (38,39) are arranged to be relatively movable by way of said reagent delivering means (41,42).

5. An apparatus as claimed in claim 4, wherein said reagent delivering means comprises first and second reagent delivering devices (41,42) which are movable between raised and lowered positions.

6. An apparatus as claimed in claim 5, further comprising cleaning means (43,44) for cleaning said first and second reagent delivering devices (41,42).

7. An apparatus as claimed in any preceding claim, wherein said light measuring means (35) comprises an automatic light amount control system, by which the amount of light input is automatically controlled as a function of the measured luminescence of a test liquid.

8. An apparatus as claimed in any preceding claim, wherein said reaction table (31) includes a turbidity measuring section for measuring a turbidity of a test liquid contained in a reaction vessel (22).

9. An apparatus as claimed in claim 8, wherein first and second reagent storing sections (61,63) are provided at a side of the reaction table (31); a plurality of first reagent vessels (62) each containing stabilization liquid are stored in said first reagent storing section (61) and a plurality of second reagent vessels (64) each containing latex particles immobilizing a given antibody or a given antigen corresponding to items to be analysed are stored in said second reagent storing section (63).

10. An apparatus as claimed in claim 9, wherein said second reagent vessels (64) additionally contain magnetic particles.

11. An apparatus as claimed in claim 10, wherein said reaction vessel storing section (21) includes a magnet (71) for sedimenting magnetic particles and latex particles bonded with said magnetic particles via an antigen or an antibody contained in said sample.

## Patentansprüche

1. Automatisches Immunoanalysegerät, umfassend:
einen Probengefäßvorhaltebereich (11), eingerichtet zum Halten einer Anzahl Probengefäße (12), die jeweils eine Probe mit einem zu messenden Antigen oder Antikörper enthalten;
einen Reaktionsgefäßvorhaltebereich (21), ausgestattet mit einem Thermostaten (17) und eingerichtet zum Halten einer Anzahl Reaktionsgefäße (22);
einen Reaktionstisch (31), der so angeordnet ist, daß er auf einer konstanten Temperatur gehalten werden kann und der eingerichtet ist, ein oder mehrere Reaktionsgefäße (22) zu halten und die Reaktionsgefäße (22) längs einer Reaktionsstraße zu bewegen;
eine Probenzugabeeinrichtung (14) zur Zugabe von einer im Probengefäß (12) enthaltenen Probe - das Gefäß wird im Probengefäßvorhaltebereich (11) gehalten - in ein Reaktionsgefäß (22), welches sich im Reaktionsgefäßvorhaltebereich (21) oder im Reaktionsgefäßaufstellbereich (31) befindet;
eine Reaktionsgefäßtransporteinrichtung (24) zum Transport eines Reaktionsgefäßes (22) zwischen dem Reaktionsgefäßvorhaltebereich (21) und dem Reaktionstisch (31);
Reagenzzugabeinrichtungen (41, 42) zur Zugabe eines Reagenzes in ein im Reaktionsgefäßvorhaltebereich (21) oder im Reaktionsgefäßaufstellbereich (31) stehendes Reaktionsgefäß (22) und
eine Lichtmeßeinrichtung (35) zur Messung einer Lichtintensität, die erzeugt wird von oder die durchtreten kann durch eine Mischung der Probe und des Reagenzes in dem Reaktiongefäß (22),
dadurch gekennzeichnet, daß der Reaktionsgefäßvorhaltebereich (21) eingerichtet ist, sowohl vor der Analyse leere Reaktionsgefäße (22) als auch bei der Analyse eine Probe enthaltende Reaktionsgefäße (22) zu halten.

2. Gerät nach Anspruch 1, wobei der Reaktionstisch (31) einen drehbaren Reaktionstisch (31) umfaßt, der eine vorgegebene Reihenfolge von Drehbewegungen durchführen kann.

3. Gerät nach Anspruch 2, wobei der erste und der zweite B-F-Trennabschnitt (32, 33), eine Substanzflüssigkeitszugabeeinrichtung (34) und die Lichtmeßeinrichtung (35) um den Reaktionstisch (31) herum angeordnet sind, und wobei der erste und der zweite Reagenzvorhaltebereich (36, 37) an einer Seite des Reaktionstisches (31) bereitgestellt sind.

4. Gerät nach Anspruch 3, wobei eine Anzahl Reagenzgefäße (38), die jeweils ein erstes Reagenz enthalten, das einen vorgegebenen Antikörper oder ein vorgegebenes Antigen immobilisiert, im ersten Reagenzvorhaltebereich (36) vorgehalten werden;
eine Anzahl Konjugatgefäße (39), die jeweils einen markierten Antikörper oder ein markiertes Antigen enthalten - entsprechend dem zu analysierenden Gegenstand, im zweiten Reagenzvorhaltebereich (37) vorgehalten werden; und wobei
das erste und das zweite Reagenzgefäß (38, 39) so angeordnet sind, daß sie über die Reagenzzugabeeinrichtung (41, 42) zueinander bewegbar sind.

5. Gerät nach Anspruch 4, wobei die Reagenzzugabeeinrichtung erste und zweite Reagenzzugabeeinrichtungen (41, 42) umfaßt, die zwischen höheren und niedrigeren Stellungen bewegbar sind.

6. Gerät nach Anspruch 5, das ferner Reinigungseinrichtungen (43, 44) zur Reinigung der ersten und der zweiten Reagenzzugabeeinrichtung (41, 42) umfaßt.

7. Gerät nach einem vorhergehenden Anspruch, wobei die Lichtmeßeinrichtung (35) ein automatisches Lichtmengenregelsystem umfaßt, mit dem die eingestrahlte Lichtmenge automatisch geregelt wird als eine Funktion der gemessenen Lumineszenz der Testflüssigkeit.

8. Gerät nach einem vorhergehenden Anspruch, wobei der Reaktionstisch (31) einen Trübungsmeßbereich besitzt zur Messung der Trübung einer Testflüssigkeit in einem Reaktionsgefäß (22).

9. Gerät nach Anspruch 8, wobei sich der erste und der zweite Reagenzvorhaltebereich (61, 63) an einer Seite des Reaktionstisches (31) befinden; eine Anzahl Reaktionsgefäße (62), die jeweils eine Stabilisatorflüssigkeit enthalten, im ersten Reagenzvorhaltebereich (61) vorgehalten sind und eine Anzahl zweiter Reaktionsgefäße (64), die jeweils Latexpartikel enthalten, die einen gegebenen Antikörper oder ein gegebenes Antigenentsprechend des zu analysierenden Gegenstands - immobilisieren, im zweiten Reagenzvorhaltebereich (63) vorghalten sind.

10. Gerät nach Anspruch 9, wobei die zweiten Reagenzgefäße (64) zusätzlich Magnetteilchen enthalten.

11. Gerät nach Anspruch 10, wobei der Reaktionsgefäßvorhaltebereich (21) einen Magneten (71) besitzt zum Sedimentieren der Magnetteilchen und der Latexteilchen, die über ein in der Probe enthaltenes Antigen oder einen enthaltenen Antikörper an die Magnetteilchen gebunden sind.

## Revendications

1. Appareil automatique d'analyse immunologique, comprenant :
une section de stockage de récipients d'échantillons (11) apte à renfermer une pluralité de récipients d'échantillons (12) contenant chacun un échantillon renfermant un antigène ou un anticorps à mesurer ;
une section de stockage de récipients de réaction (21) munie d'un thermostat (17) et apte à renfermer une pluralité de récipients de réaction (22) ;
une table de réaction (31) conçue pour être maintenue à une température constante et apte à renfermer un ou plusieurs récipients de réaction (22) et à déplacer lesdits récipients de réaction (22) le long d'une ligne de réaction ;
un moyen de distribution d'échantillons (14) pour distribuer un échantillon présent dans un récipient d'échantillon (12) maintenu dans la section de stockage de récipients d'échantillons (11) à un récipient de réaction (22) maintenu dans la section de stockage de récipients de réaction (21) ou dans la section de montage de récipients de réaction (31) ;
un moyen de transport de récipients de réaction (24) pour transporter un récipient de réaction (22) entre la section de stockage de récipients de réaction (21) et la table de réaction (31) ;
des moyens de distribution de réactif (41, 42) pour distribuer un réactif dans un récipient de réaction (22) maintenu dans la section de stockage de récipients de réaction (21) ou dans la section de montage de récipients de réaction (31) ; et
un moyen de mesure de lumière (35) pour mesurer l'intensité de la lumière engendrée par, ou transmise à travers, un mélange de l'échantillon et du réactif présent dans un récipient de réaction (22) ; caractérisé en ce que
la section de stockage de récipients de réaction (21) est apte à renfermer à la fois les récipients de réaction vides (22) avant analyse et les récipients de réaction contenant des échantillons (22) au cours de l'analyse.

2. Appareil suivant la revendication 1, dans lequel la table de réaction (31) consiste en une table de réaction rotative (31) apte à effectuer une séquence prédéterminée de mouvements de rotation.

3. Appareil suivant la revendication 2, dans lequel des première et seconde sections de séparation B-F (32, 33), un dispositif de distribution de substance liquide (34) et le moyen de mesure de lumière (35) sont disposés de manière circonférentielle autour de la table de réaction (31) et dans lequel les première et seconde sections de stockage de réactifs (36, 37) sont placées d'un côté de ladite table de réaction (31).

4. Appareil suivant la revendication 3, dans lequel une pluralité de récipients de réactifs (38) contenant chacun un premier réactif immobilisant un anticorps donné ou un antigène donné est stockée dans la section de stockage de premier réactif (36) ; une pluralité de récipients conjugués (39) contenant chacun un anticorps marqué ou un antigène marqué correspondant à des substances à analyser est stockée dans la section de stockage de second réactif (37) ; et dans lequel les premier et second récipients de réactifs (38, 39) sont disposés de manière à être relativement mobiles par l'intermédiaire du moyen de distribution de réactifs (41, 42).

5. Appareil suivant la revendication 4, dans lequel le moyen de distribution de réactifs comprend des premier et second dispositifs de distribution de réactifs (41, 42) qui sont mobiles entre une position haute et une position basse.

6. Appareil suivant la revendication 5, comprenant en outre des moyens de nettoyage (43, 44) pour nettoyer les premier et second dispositifs de distribution de réactifs (41, 42).

7. Appareil suivant l'une quelconque des revendications précédentes, dans lequel le moyen de mesure de lumière (35) comprend un système de contrôle automatique de quantité de lumière, au moyen duquel la quantité de lumière introduite est ajustée automatiquement en fonction de la luminescence mesurée d'un liquide d'essai.

8. Appareil suivant l'une quelconque des revendications précédentes, dans lequel la table de réaction (31) comprend une section de mesure de turbidité pour la mesure de la turbidité d'un liquide d'essai présent dans un récipient de réaction (22).

9. Appareil suivant la revendication 8, dans lequel les première et seconde sections de stockage de réactifs (61, 63) sont placées d'un côté de la table de réaction (31) ; une pluralité de premiers récipients de réactifs (62) contenant chacun un liquide stabilisant est stockée dans la première section de stockage de réactifs (61) et une pluralité de seconds récipients de réactifs (64) contenant chacun des particules de latex immobilisant un anticorps donné ou un antigène donné correspondant à des substances à analyser est stockée dans la seconde section de stockage de réactifs (63).

10. Appareil suivant la revendication 9, dans lequel les seconds récipients de réactifs (64) contiennent en outre des particules magnétiques.

11. Appareil suivant la revendication 10, dans lequel la section de stockage de récipients de réaction (21) comprend un aimant (71) pour la sédimentation des particules magnétiques et des particules de latex liées auxdites particules magnétiques par l'intermédiaire d'un antigène ou d'un anticorps présent dans l'échantillon.
